# EUROPEAN PATENT APPLICATION

(11) **EP 4 603 310 A1**
(43) Date of publication of application: **20.08.2025**
(21) Application number: 25152532.5
(22) Date of filing: 17.01.2025
(51) Int. Cl.: B60H 1/32, H02K 7/08, H02K 9/00

(54) **REFRIGERANT CIRCULATION SYSTEM**

(30) Priority: 25.01.2024 JP 2024009472
(71) Applicant: MAZDA MOTOR CORPORATION, Hiroshima 730-8670 (JP)
(72) Inventor: Kawaguchi, Kentaro, Aki-gun, Hiroshima, 730-8670 (JP); Miyauchi, Yuma, Aki-gun, Hiroshima, 730-8670 (JP)
(74) Representative: Behr, Wolfgang

(57) **Abstract**

Refrigerant circulation system which circulates CO₂ containing refrigerant therethrough, including a compressor which compresses the refrigerant, a motor (1), a motor speed sensor which detects a rotational speed of the motor (1), and a control device which controls at least the motor (1), wherein the motor (1) includes a rotor (11), a stator (12), a rotation shaft (13) coupled to the rotor (11), and slide bearings (14) supporting the rotation shaft (13) and being lubricated using the refrigerant compressed by the compressor, and is configured so that the refrigerant passing through the motor (1) expands after flowing out of the slide bearings (14) and is used for cooling one of the rotor (11) and the stator (12), the motor (1) further includes a flow rate adjustment mechanism which adjusts a flow rate of the refrigerant, and the control device controls the flow rate adjustment mechanism to adjust the flow rate of the refrigerant according to the rotational speed detected by the motor speed sensor.

## Description

### TECHNICAL FIELD

The present disclosure relates to a refrigerant circulation system which circulates refrigerant.

### BACKGROUND OF THE DISCLOSURE

Conventionally, a refrigerant circulation system which circulates refrigerant through components such as a compressor and a heat exchanger is adopted in refrigeration cycles used in air conditioners. Recently, such a refrigerant circulation system is also used for cooling components in vehicles, such as batteries in electric vehicles (EVs) or hybrid vehicles. In one example, JP2023-037294A discloses a vehicle that achieves size and cost reductions in a refrigerant circulation system by sharing a single compressor and supplying refrigerant flowing out from the compressor to both an air conditioning system and a battery.

Meanwhile, rolling bearings and slide bearings are conventionally used to support rotation shafts of power sources, such as engines and motors, of vehicles. Here, when rolling bearings are applied to a motor of an electric vehicle, the rotation shaft of the motor may rotate at high speeds of over 30,000 rpm, for example, which raises a concern about the lifespan of the bearings due to rolling fatigue. On the other hand, if typical slide bearings that use oil as lubricant are applied to the motor, significant losses may occur due to oil agitation resistance acting against the rotation shaft of the motor.

### SUMMARY OF THE DISCLOSURE

Therefore, the present inventors considered applying a motor to the refrigerant circulation system described above, applying, to a rotation shaft of the motor, slide bearings using refrigerant which circulates the system (especially, CO₂ refrigerant that becomes liquid under compression by a compressor) as its lubricant. In addition, the present inventors considered having the motor also carry a part of the function of the refrigeration cycle performed by the refrigerant circulation system (in particular, functioning as an expansion valve and an evaporator of the cycle). Specifically, the present inventors considered using the refrigerant which passes through the inside of the motor (evaporator) for cooling (evaporator) a rotor and a stator by letting the refrigerant expand (expansion valve) after flowing out from the slide bearings.

In a refrigerant circulation system that includes such a motor, heat is generated in the slide bearings due to friction (frictional heating), which may cause various effects. For example, when the refrigerant is heated in the slide bearings, the refrigerant may not sufficiently cool the rotor and the stator, and wearing or seizing may occur in the slide bearings. Therefore, it is necessary to control the refrigerant circulation system in consideration of the frictional heating that occurs in the slide bearings.

The present disclosure is made in view of the above situations, and one purpose thereof is to provide a refrigerant circulation system in which slide bearings of a motor are lubricated by refrigerant, and cooling is accurately controlled in consideration of frictional heating generated in the slide bearings.

In order to achieve the above-described purpose, the present disclosure provides a refrigerant circulation system configured to circulate refrigerant containing CO₂ therethrough, including a compressor, a motor, a motor speed sensor, and a control device. The compressor compresses the refrigerant. The motor includes a rotor, a stator, a rotation shaft coupled to the rotor, and slide bearings supporting the rotation shaft. The slide bearings are lubricated using the refrigerant compressed by the compressor. The motor is configured so that the refrigerant passing through the motor expands after flowing out of the slide bearings, and is used for cooling one of the rotor and the stator. The motor speed sensor detects a rotational speed of the motor (motor speed). The control device controls at least the motor. The motor further includes a flow rate adjustment mechanism which adjusts a flow rate of the refrigerant. The control device controls the flow rate adjustment mechanism to adjust the flow rate of the refrigerant according to the rotational speed detected by the motor speed sensor.

According to this configuration, in the refrigerant circulation system which lubricates the slide bearings of the motor with the refrigerant, transient frictional heat due to boundary lubrication at the slide bearings can be grasped based on the motor speed. Therefore, according to the present disclosure, the flow rate adjustment mechanism of the motor can be accurately controlled, taking into consideration the frictional heat due to boundary lubrication at the slide bearings. For example, when the frictional heat is high, the refrigerant flow rate can be increased by the flow rate adjustment mechanism, and as a result, wearing or seizing of the slide bearings due to the frictional heat can be prevented.

In the present disclosure, the control device may control the flow rate adjustment mechanism to increase the flow rate of the refrigerant as the rotational speed decreases. According to this configuration, wearing or seizing of the slide bearings due to the frictional heat can be prevented effectively.

In the present disclosure, the control device may control the flow rate adjustment mechanism based on the rotational speed in a first speed range and in particular only when the rotational speed is below a given threshold. According to this configuration, within a low-speed section where the transient frictional heat is generated due to boundary lubrication, the flow rate adjustment mechanism can be controlled while accurately grasping the frictional heat based on the motor speed.

In the present disclosure, the refrigerant circulation system may comprise a third temperature sensor which detects a sliding surface temperature of the slide bearings), wherein the control device is configured to control the flow rate adjustment mechanism to adjust the flow rate of the refrigerant according to a temperature measured by the third temperature sensor.

In the present disclosure, the control device may control the flow rate adjustment mechanism based on the temperature measured by the third temperature sensor in a third speed range and in particular only when the rotational speed is above a given threshold.

In the present disclosure, the control device may calculate a frictional heat quantity generated by the slide bearings according to the rotational speed and/or a sliding surface temperature of the slide bearings. Further, the control device may calculate a calorific value of a coil of the rotor and/or the stator to be cooled, and may further calculate a required refrigeration capacity to be achieved by the refrigerant circulation system based on the frictional heat quantity and the calorific value of the coil. The control device may control the flow rate adjustment mechanism based on the required refrigeration capacity. According to this configuration, the required refrigeration capacity of the entire refrigerant circulation system is set by taking into consideration the frictional heat quantity caused at the slide bearings, ensuring adequate cooling of the motor by the refrigerant.

In the present disclosure, the control device may determine the calorific value of the coil based on a current supplied to the coil and/or a control signal supplied to the motor.

In the present disclosure, the refrigerant circulation system may further comprise at least one pressure sensor configured to detect a pressure of the refrigerant in the refrigerant circulation system and/or at least one temperature sensor configured to detect a temperature of the refrigerant in the refrigerant circulation system, wherein the control device controls the flow rate adjustment mechanism in dependence on a pressure measured by the at least one pressure sensor and/or a temperature measured by the at least one temperature sensor.

In the present disclosure, the refrigerant circulation system may in particular include a pressure sensor which detects a pressure of the refrigerant after being compressed by the compressor, and a temperature sensor which detects a temperature of the refrigerant before the refrigerant is supplied to the slide bearings. The control device may calculate a target expansion pressure after the refrigerant expands based on a required refrigeration capacity, the pressure detected by the pressure sensor, and the temperature detected by the temperature sensor. The control device may determine a target flow rate of the refrigerant by the flow rate adjustment mechanism for achieving the target expansion pressure. The control device may control the flow rate adjustment mechanism so that the refrigerant flows at the target flow rate. According to this configuration, the target expansion pressure is accurately calculated based on the required refrigeration capacity, and the flow rate adjustment mechanism is controlled based on the target flow rate according to the target expansion pressure, achieving the required refrigeration capacity accurately.

In the present disclosure, the motor may further include guide parts which direct the refrigerant immediately after flowing out of the slide bearings toward the coil applied to one of the rotor and the stator to be cooled.

In the present disclosure, the flow rate adjustment mechanism may adjust the flow rate of the refrigerant by moving one of the guide parts and the slide bearings in an axial direction of the motor so that a size of a gap from which the refrigerant flows out is changed, the gap being located between the guide part and an end part of the slide bearing on a guide part side. According to this configuration, by the flow rate adjustment mechanism changing the size of the gap between the guide part and the end part of the slide bearing, the flow rate of the refrigerant supplied for cooling one of the rotor and the stator of the motor can be adjusted accurately.

In another embodiment of the present disclosure, the flow rate adjustment mechanism may comprise a flow regulating valve arranged in a refrigerant supply passage.

The present disclosure further comprises a vehicle comprising the refrigerant circulation system of the present invention.

In the present disclosure, the motor may be configured for driving the vehicle.

In the present disclosure, the vehicle may be an electric vehicle driven by the motor.

### BRIEF DESCRIPTION OF DRAWINGS

Fig. 1 is a schematic structural diagram of a vehicle to which a refrigerant circulation system according to one embodiment of the present disclosure is applied.
Fig. 2 is a schematic structural diagram of a motor according to this embodiment.
Fig. 3 is a block diagram illustrating an electric configuration of the refrigerant circulation system according to this embodiment.
Fig. 4 is an explanatory diagram illustrating a refrigeration cycle in the refrigerant circulation system according to this embodiment.
Fig. 5 is an explanatory diagram illustrating a basic concept of a flow rate control method according to this embodiment.
Fig. 6 is a flowchart illustrating the flow rate control method according to this embodiment.
Fig. 7 is a time chart illustrating the flow rate control method according to this embodiment.
Fig. 8 is an explanatory diagram illustrating a flow rate adjustment mechanism according to a modification of this embodiment.

### DETAILED DESCRIPTION OF THE DISCLOSURE

Hereinafter, a refrigerant circulation system according to one embodiment of the present disclosure will be described with reference to the accompanying drawings.

### [Overall Structure]

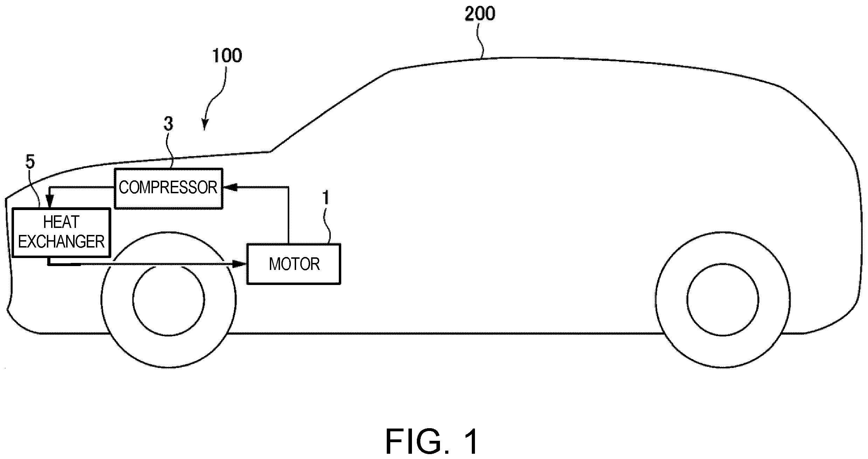

First, the overall structure of the refrigerant circulation system according to this embodiment will be described with reference to Fig. 1. Fig. 1 is a schematic structural diagram of a vehicle 200 to which the refrigerant circulation system according to this embodiment is applied.

As illustrated in Fig. 1, the vehicle 200 is, for example, an electric vehicle, and includes a refrigerant circulation system 100 which circulates refrigerant in a refrigeration cycle. The refrigerant circulation system 100 includes a motor (e.g., electric motor) 1 which generates power to drive the vehicle 200, a compressor 3 which compresses the refrigerant supplied to the motor 1, and a heat exchanger 5 which includes, for example, a condenser and a fan and cools the refrigerant compressed by the compressor 3.

The refrigerant circulation system 100 circulates CO₂ refrigerant (refrigerating machine oil and additives may be included) as natural refrigerant. Therefore, the compressor 3 compresses the refrigerant at extremely high pressure. The motor 1 functions as both an expansion valve and an evaporator in the refrigeration cycle by using the refrigerant compressed by the compressor 3 for both lubricating slide bearings supporting a rotation shaft and cooling a rotor and a stator (details will be described later). For example, in the refrigerant circulation system 100, high-temperature (hot) liquid refrigerant is supplied from the compressor 3 to the heat exchanger 5, low-temperature (cold) liquid refrigerant is supplied from the heat exchanger 5 to the motor 1, and high-temperature (hot) gas refrigerant is supplied from the motor 1 to the compressor 3. In this case, the motor 1 is cooled therein by latent heat of vaporization of the refrigerant. Note that the refrigerant circulated by the refrigerant circulation system 100 may be shared with, for example, an air conditioning system which performs air conditioning inside the vehicle 200.

### [Structure of Motor]

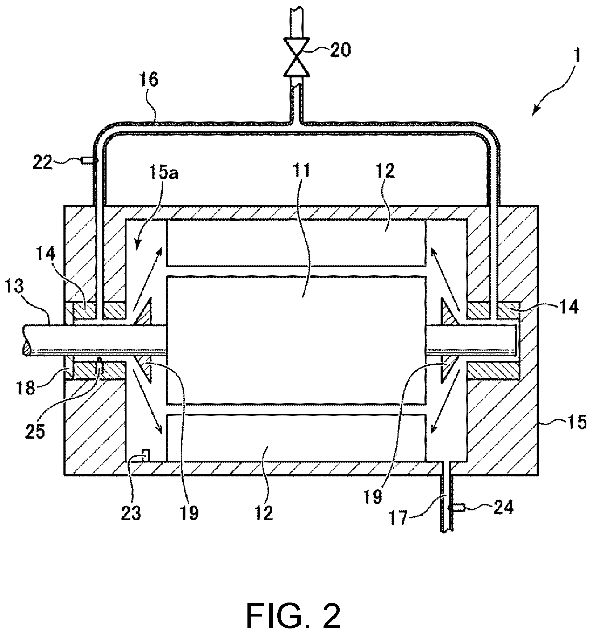

Next, a structure of the motor 1 according to this embodiment will be described with reference to Fig. 2. Fig. 2 is a schematic structural diagram of the motor 1 according to this embodiment. Specifically, Fig. 2 is a cross-sectional view of the motor 1 taken along its axial direction.

As illustrated in Fig. 2, the motor 1 is a system generally including a rotor 11, a stator 12, a rotation shaft 13 coupled in its one end part to a transaxle (not illustrated) of the vehicle 200 and coupled at the other end to the rotor 11, a pair of slide bearings 14 supporting the rotation shaft 13, and a housing 15 accommodating the rotor 11, the stator 12, the rotation shaft 13, and the slide bearings 14.

The motor 1 further includes a refrigerant supply passage 16 which supplies the refrigerant compressed by the compressor 3 to the slide bearings 14. Specifically, the refrigerant supply passage 16 supplies the refrigerant into a gap between the rotation shaft 13 and the slide bearings 14. The slide bearings 14 are lubricated by the refrigerant (CO₂ refrigerant) supplied from the refrigerant supply passage 16, which is used as lubricant. Typically, the slide bearings 14 are lubricated using liquid refrigerant.

Here, in a case of applying rolling bearings to the motor 1, for example in an electric vehicle, the rotation shaft 13 of the motor 1 rotates at a high speed of over 30,000 rpm, which may cause an issue with lifespan due to rolling fatigue. On the other hand, if conventional slide bearings using oil are applied to the motor 1, significant losses may occur due to oil agitation resistance acting against the rotation shaft 13. Therefore, in this embodiment, the slide bearings 14 utilizing the refrigerant (CO₂ refrigerant) liquified by being compressed by the compressor 3 are applied to the motor 1. Thus, the issues of rolling fatigue and oil agitating resistance can be resolved.

The refrigerant used as a lubricant in the slide bearings 14 is then supplied to the rotor 11 and the stator 12 for cooling thereof. Specifically, in the motor 1, a coil (not illustrated) is provided in the stator 12, and the refrigerant is used to cool the coil of the stator 12. In particular, the motor 1 includes a pair of guide parts 19 having a substantially truncated cone shape and provided on the rotation shaft 13 (in the manner that the rotation shaft 13 penetrates the guiding parts 19) to face the corresponding slide bearings 14. Each of the guide parts 19 directs the refrigerant flowing (discharged) out from the gap between the rotation shaft 13 and the slide bearing 14, toward the coil of the stator 12 (see arrows in Fig. 2). The guide part 19 has an inclined surface facing the gap between the rotation shaft 13 and the slide bearing 14, and the inclined surface directs the refrigerant toward the coil (specifically, an end part of the coil) of the stator 12, allowing the refrigerant to be sprayed onto the coil and evaporate.

In such a motor 1, the refrigerant is supplied from the gap between the rotation shaft 13 and the slide bearings 14 into a space 15a within the housing 15, where the rotor 11 and stator 12 are disposed, to decompress. Therefore, the gap between the rotation shaft 13 and the slide bearings 14 functions as an expansion valve. Furthermore, the refrigerant exchanges heat with the relatively high-temperature stator 12 (the refrigerant is sprayed onto the coil of the stator 12 and evaporates), and thus, the motor 1 also functions as an evaporator. The refrigerant used for cooling (heat exchange) in this manner is then discharged from a refrigerant discharge passage 17 of the motor 1 and returned to the compressor 3 (see Fig. 1).

Note that, without limiting to supplying the refrigerant to the stator 12 via the slide bearings 14 as illustrated in Fig. 2, the refrigerant may be supplied directly to the stator 12. In this case, the refrigerant to the stator 12 may be supplied via the expansion valve. In a motor provided with a coil in the rotor 11 instead of the stator 12, the refrigerant may be used to cool the coil of the rotor 11.

Additionally, the motor 1 includes a sealing member 18 to seal the slide bearing 14 disposed at the side of the rotation shaft 13 connected to the transaxle. The sealing member 18 is provided in the housing 15 to prevent the refrigerant from leaking outside through the gap between the slide bearing 14 and the rotation shaft 13. On the other hand, the slide bearing 14 on the opposite side of the rotation shaft 13, which is not connected to the transaxle, does not have such a sealing member 18, and the gap between the slide bearing 14 and the rotation shaft 13 is sealed by being covered by the housing 15.

Further, the motor 1 is provided in the refrigerant supply passage 16 a flow regulating valve 20 ("flow rate adjustment mechanism") which adjusts a flow rate of the refrigerant supplied to the motor 1. In addition, the motor 1 is provided with a first temperature sensor 22 which detects a temperature of the refrigerant before being supplied to the slide bearings 14 (i.e., a temperature of the refrigerant supplied from the heat exchanger 5 to the motor 1), a second pressure sensor 23 which detects a pressure of the refrigerant after flowing out from the slide bearings 14 (i.e., a pressure of the refrigerant in the space 15a within the housing 15), a second temperature sensor 24 which detects a temperature of the refrigerant after cooling the stator 12 (i.e., a temperature of the refrigerant supplied from the motor 1 to the compressor 3), and a third temperature sensor 25 which detects a sliding surface temperature of the slide bearings 14. Specifically, the first temperature sensor 22 is provided on the refrigerant supply passage 16, the second pressure sensor 23 is provided in the space 15a within the housing 15, the second temperature sensor 24 is provided in the refrigerant discharge passage 17, and the third temperature sensor 25 is provided in the slide bearings 14. Note that the locations of the first temperature sensor 22, the second pressure sensor 23, the second temperature sensor 24, and the third temperature sensor 25 are not limited to those illustrated in Fig. 2, as long as they can detect the temperatures and pressures described above.

### [Electric Configuration of Refrigerant Circulation System]

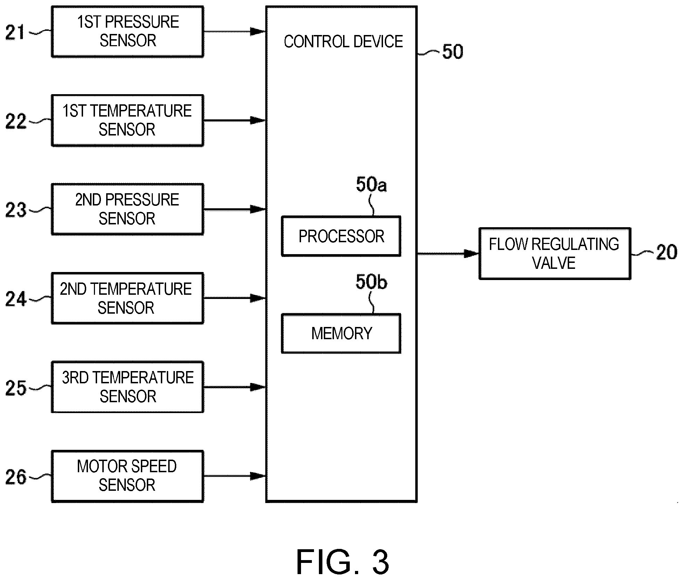

Next, an electric configuration of the refrigerant circulation system 100 will be explained with reference to Fig. 3. Fig. 3 is a block diagram illustrating the electric configuration of the refrigerant circulation system 100 according to this embodiment.

As illustrated in Fig. 3, the refrigerant circulation system 100 includes, in addition to the above flow regulating valve 20, the first temperature sensor 22, the second pressure sensor 23, the second temperature sensor 24, and the third temperature sensor 25, a first pressure sensor 21 which detects a pressure of the refrigerant after being compressed by the compressor 3 (i.e., a pressure of the refrigerant supplied from the compressor 3 to the heat exchanger 5), a motor speed sensor 26 which detects a rotational speed of the motor 1 (rotational speeds of the rotor 11 and the rotation shaft 13, which are synonymous with the rotational velocity), and a control device 50. The control device 50 is comprised of a computer including one or more processors (typically CPUs) 50a, and a memory 50b, such as a Read-Only Memory (ROM) or Random Access Memory (RAM), which stores various programs (including a primary control program, such as an Operating System (OS), and application programs which are activated on the OS and execute specific functions) which are interpreted and executed on the processor 50a, and various kinds of data.

Specifically, the control device 50 controls the flow regulating valve 20 of the motor 1 based on the detection values from the first pressure sensor 21, the first temperature sensor 22, the second pressure sensor 23, the second temperature sensor 24, the third temperature sensor 25, and the motor speed sensor 26. In particular, in this embodiment, the control device 50 determines (estimates) frictional heat generated by the slide bearings 14 of the motor 1 based on the motor speed detected by the motor speed sensor 26 and/or the sliding surface temperature detected by the third temperature sensor 25, and controls an opening of the flow regulating valve 20 to adjust the flow rate of the refrigerant to suppress various influences caused by the frictional heat.

### [Flow Rate Control Method]

Next, a method of controlling the flow regulating valve 20 of the motor 1 by the control device 50 (flow rate control method) will be described in detail.

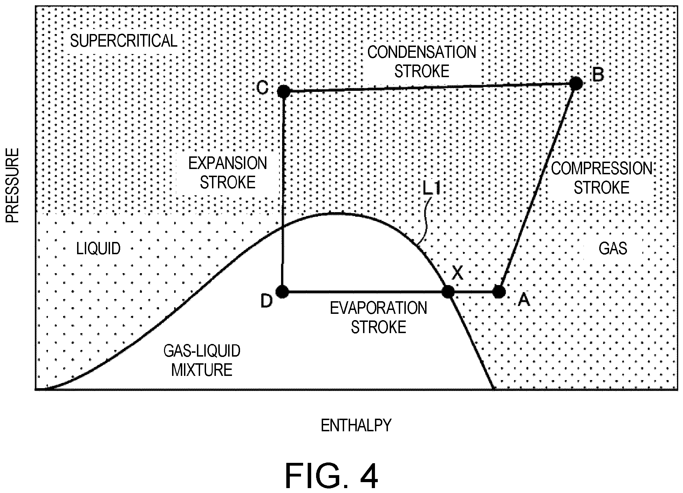

First, a refrigeration cycle of the refrigerant circulation system 100 of this embodiment will be explained with reference to Fig. 4. Fig. 4 illustrates the refrigeration cycle of the refrigerant (CO₂ refrigerant) with enthalpy and pressure indicated in horizontal and vertical axes, respectively. Further, Fig. 4 includes ranges indicating some states which the refrigerant may take (specifically, individual states of liquid, gas, gas-liquid mixture, and supercritical). The section enclosed by the curve line L1 in Fig. 4 indicates the gas-liquid mixture. In other words, the curve line L1 corresponds to a boundary of the gas-liquid mixture state and the supercritical state, the liquid state, and the gas state.

As illustrated in Fig. 4, the refrigeration cycle realized by the refrigerant circulation system 100 is repeatedly performed in the order of points A→B→C→D. Specifically, this refrigeration cycle includes a compression stroke performed by the compressor 3 from point A to point B, a condensation stroke performed by the heat exchanger 5 from point B to point C, an expansion stroke performed by the motor 1 from point C to point D (i.e., the expansion of the refrigerant from the slide bearings 14 inside the motor 1 to the space 15a within the housing 15), and an evaporation stroke performed by the motor 1 from point D to pointA(i.e., the cooling (heat exchange) of the stator 12 in the motor 1 by the refrigerant).

In the evaporation stroke from point D to point A, the enthalpy (heat quantity) from point D to point X on the curve line L1 (the intersection between the line segment DA and the curve line L1) corresponds to the refrigeration capacity (cooling amount) of the refrigerant circulation system 100 from the refrigeration cycle, and the enthalpy (heat quantity) from point X to point A corresponds to a degree of overheat of the refrigerant circulation system 100 from the refrigeration cycle. Generally, in the evaporator of the refrigeration cycle, a state where the refrigerant temperature rises above a saturation vapor temperature is referred to as "overheat," and a temperature difference of this risen refrigerant temperature from the saturation vapor temperature is referred to as the "degree of overheat." Therefore, the degree of overheat is obtained by subtracting the saturation vapor temperature corresponding to the pressure at point D (start of the evaporation stroke) from the temperature at point A (start of the compression stroke). Increasing the degree of overheat ensures the refrigerant to be in the gaseous state at the start of the compression stroke, i.e., immediately before reaching the compressor 3, preventing the liquid refrigerant from entering the compressor 3 (liquid flow-back). However, if the degree of overheat is too high, the refrigeration capacity decreases, in other words, the refrigerant may not cool the stator 12 effectively.

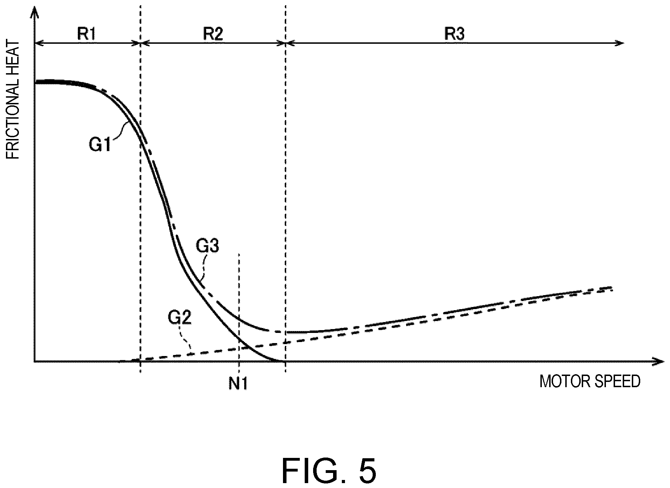

Next, a basic concept of the flow rate control method according to this embodiment will be explained with reference to Fig. 5. Fig. 5 illustrates a Stribeck curve line with respect to the slide bearings 14 with the motor speed in the horizontal axis and the frictional heat generated by the slide bearings 14 of the motor 1 (the frictional heat described above, corresponding uniquely to a friction coefficient) in the vertical axis. Specifically, the solid graph G1 indicates the frictional heat generated by boundary lubrication at the slide bearings 14, the dashed graph G2 indicates the frictional heat generated by fluid lubrication in the slide bearings 14, and the dotted-chain graph G3 indicates the combined frictional heat generated by both boundary and fluid lubrication (mixed lubrication).

As illustrated in Fig. 5, in a low-speed range R1, only frictional heat due to boundary lubrication is generated, and no frictional heat due to fluid lubrication occurs. In a high-speed range R3, only frictional heat due to fluid lubrication is generated, and no frictional heat due to boundary lubrication occurs. In an intermediate-speed range R2, between the ranges R1 and R3, frictional heat due to both boundary and fluid lubrication (mixed lubrication) is generated. It can also be seen that the frictional heat due to boundary lubrication decreases sharply as the motor speed increases, in other words, increases sharply as the motor speed decreases (curve line G1). In contrast, the frictional heat due to fluid lubrication is generally smaller than that due to boundary lubrication and increases gradually as the motor speed increases (curve line G2).

When the vehicle 200 runs at a low speed or stops after deceleration, the motor speed enters the low-speed range R1, where relatively large frictional heat due to boundary lubrication is generated. Here, since the motor speed is low, the cooling demand for the stator 12 by the refrigerant is low, but, if the refrigerant flow rate is reduced according to this cooling demand, wearing or seizing may occur in the slide bearings 14 due to the frictional heat. On the other hand, when the vehicle 200 accelerates rapidly or from a start-up, the motor speed enters the high-speed range R3, where relatively large frictional heat due to fluid lubrication is generated. In this case, since the motor speed is high, the temperature of the stator 12 becomes relatively high, while the refrigerant is heated by the frictional heat at the slide bearings 14 (the refrigerant may vaporize), and thus the stator 12 may not be cooled sufficiently by the refrigerant, potentially leading to an output decrease of the motor 1.

Here, the frictional heat due to boundary lubrication results from solid contact between the slide bearings 14 and the rotation shaft 13 (specifically, the contact between asperities of surface roughness of the solid materials). This frictional heat due to boundary lubrication occurs mainly in the relatively low-speed range R1 (and a lower-speed side of the range R2), and it is transient heat generated by reaching a flash temperature at the contact points, similar to flint sparking. Therefore, the frictional heat due to boundary lubrication changes excessively fast, and thus it is difficult to track using the detection values of the temperature sensors, but it can be estimated based on the motor speed. In other words, the motor speed can be used to accurately estimate the solid contact between the slide bearings 14 and the rotation shaft 13.

On the contrary, the frictional heat due to fluid lubrication is caused by shearing heat generated as fluid (refrigerant) trapped between the slide bearings 14 and the rotation shaft 13 is dragged by the rotation. This fluid lubrication frictional heat occurs mainly in the relatively high-speed range R3 (and a higher-speed side of the range R2), and it is cumulative heat generated due to the shearing over a long period of time. For this reason, if attempting to determine the frictional heat due to fluid lubrication based on the motor speed as described above, a discrepancy may occur, and therefore, it is preferable to use a temperature detected by a temperature sensor, specifically the sliding surface temperature detected by the third temperature sensor 25, to estimate the frictional heat due to fluid lubrication.

Thus, in this embodiment, the control device 50 estimates a transient temperature rise at the sliding surfaces due to the frictional heat based on the motor speed detected by the motor speed sensor 26, and controls the flow regulating valve 20 based on the estimation result within a relatively low-speed section including at least the range R1 where the frictional heat due to boundary lubrication is generated (specifically within a speed range lower than a given threshold N1 (a speed determined in advance within the intermediate speed range R2)). Specifically, since the frictional heat due to boundary lubrication increases as the motor speed decreases, the control device 50 controls the flow regulating valve 20 to increase the refrigerant flow rate. Note that a motor speed where the magnitude of frictional heat transitions between boundary lubrication and fluid lubrication is applied as the threshold N1, for example.

On the other hand, within a relatively high-speed section including at least the range R3 where the frictional head due to fluid lubrication is generated (specifically, within the speed range including the threshold N1 and above), the control device 50 estimates the cumulative temperature rise at the sliding surfaces due to the frictional heat based on the sliding surface temperature detected by the third temperature sensor 25 instead of the motor speed described above, and controls the flow regulating valve 20 based on the estimation result. Specifically, since the frictional heat due to fluid lubrication increases as the sliding surface temperature increases, the control device 50 controls the flow regulating valve 20 to increase the refrigerant flow rate.

Further, in this embodiment, the control device 50 calculates the heat quantity due to the frictional heat (frictional heat quantity) generated at the slide bearings 14, the heat quantity generated by the coil of the stator 12 (calorific value of the coil) which needs to be cooled by the refrigerant, and a required refrigeration capacity which needs to be realized by the refrigerant circulation system 100. It also controls the flow regulating valve 20 based on the required refrigeration capacity. In other words, in this embodiment, the control device 50 controls the refrigerant flow rate via the flow regulating valve 20, by using the required refrigeration capacity in the entire refrigerant circulation system 100 obtained by adding the frictional heat to the cooling demand for the stator 12.

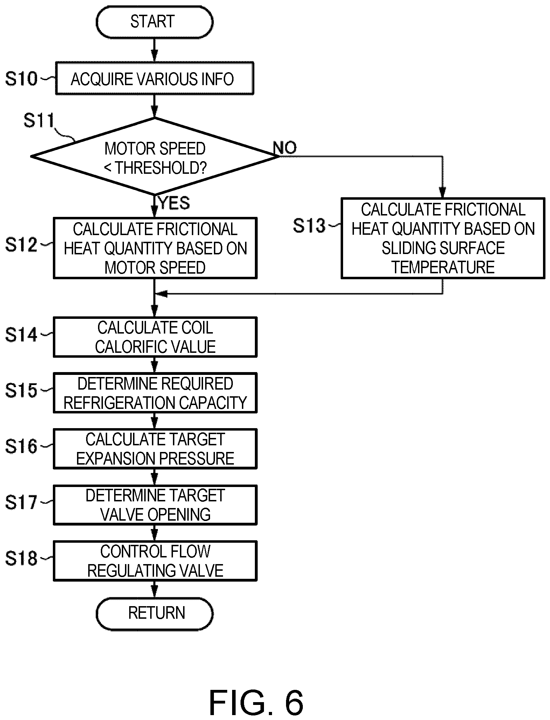

Next, the flow rate control method of this embodiment will be described in more detail with reference to Fig. 6. Fig. 6 is a flowchart illustrating the flow rate control method according to this embodiment. This flow is executed by the control device 50 repeatedly at given intervals. Specifically, the flow rate control method is implemented by the processor 50a inside the control device 50 reading and executing a program stored in the memory 50b.

First, at Step S10, the control device 50 acquires various information, such as the detection values from the first pressure sensor 21, the first temperature sensor 22, the second pressure sensor 23, the second temperature sensor 24, the third temperature sensor 25, and the motor speed sensor 26. At Step S11, the control device 50 determines whether the motor speed acquired at Step S10 is below the threshold N1.

If the control device 50 determines that the motor speed is below the threshold N1 (Step S11: Yes), the flow proceeds to Step S12. At Step S12, the control device 50 calculates the frictional heat quantity generated by the slide bearings 14 based on the motor speed acquired at Step S10 (i.e., estimates the transient temperature rise at the sliding surfaces due to the frictional heat generated by boundary lubrication). In this case, the calculation by the control device 50 results in a larger frictional heat quantity as the motor speed decreases. For example, the control device 50 calculates the frictional heat quantity based on a friction coefficient, a solid contact pressure, the motor speed (rotational speed), and a specific frictional heat quantity. The solid contact pressure is obtained from a Hertzian contact area, an asperity density, an asperity curvature, a standard deviation of asperity height, etc.

On the other hand, if the control device 50 determines that the motor speed is not below the threshold N1 (Step S11: No), that is, if the motor speed is the threshold N1 or above, the flow proceeds to Step S13. At Step S13, the control device 50 calculates the frictional heat quantity generated by the slide bearings 14 based on the sliding surface temperature acquired at Step S10 (detected by the third temperature sensor 25), i.e., estimates the cumulative temperature rise at the sliding surfaces due to the frictional heat generated by fluid lubrication. In this case, the control device 50 calculates a larger frictional heat quantity as the sliding surface temperature increases. For example, the control device 50 calculates the frictional heat quantity based on viscosity of the refrigerant, a speed gradient of the motor speed (rotational speed) between the slide bearings 14 and the rotation shaft 13, etc. The frictional heat quantity calculated in this manner increases as the sliding surface temperature rises.

After steps S12 and S13 described above, the control device 50 proceeds to Step S14. At Step S14, the control device 50 calculates the calorific value of the coil according to an electric current amount (coil current amount) supplied to the stator 12 of the motor 1. The coil current amount is a current amount corresponding to a control signal supplied from the control device 50 to the motor 1 (specifically, the current amount inputted to the stator 12 of the motor 1 via an inverter), and the calorific value of the coil is a heat generation quantity uniquely defined based on the coil current amount.

Next, at Step S15, the control device 50 determines the required refrigeration capacity for the refrigeration cycle of the refrigerant circulation system 100 to achieve, based on the frictional heat quantity calculated at Steps S12 and S13, and the calorific value of the coil calculated at Step S14. Specifically, the control device 50 adds the frictional heat quantity to the calorific value of the coil, and obtains the required refrigeration capacity corresponding to the heat quantity obtained by the addition (a value uniquely corresponding to the heat quantity).

Next, at Step S16, the control device 50 calculates a target expansion pressure to be set after the refrigerant expands, based on the required refrigeration capacity determined at Step S15. Specifically, the control device 50 calculates a target expansion pressure (pressure at point D) for achieving the required refrigeration capacity (the heat quantity between points D and X) from the refrigeration cycle realized by the refrigerant circulation system 100 illustrated in Fig. 4, based on the pressure of the refrigerant after being compressed by the compressor 3 (pressure at point B) which is detected by the first pressure sensor 21, and the temperature of the refrigerant before being supplied to the slide bearings 14 (temperature at point C) which is detected by the first temperature sensor 22.

Next, at Step S17, the control device 50 determines a target valve opening of the flow regulating valve 20 of the motor 1 to achieve the target expansion pressure calculated at Step S16. For example, the target valve opening is defined in advance based on the target expansion pressure. Further, at Step S18, the control device 50 controls the flow regulating valve 20 to reach the target valve opening determined at Step S17.

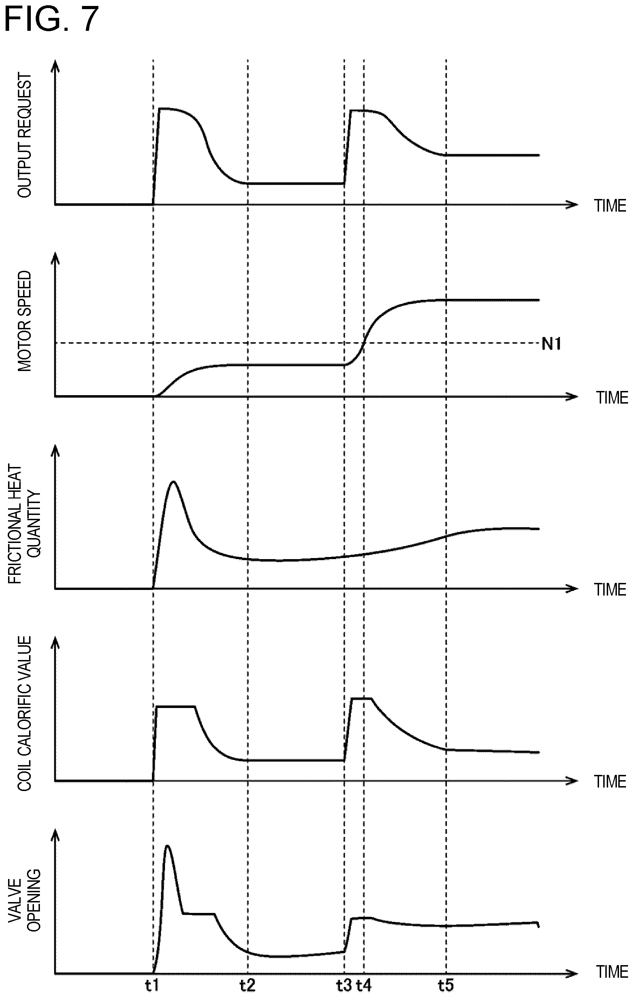

Next, Fig. 7 is a time chart illustrating the flow rate control method according to this embodiment. Fig. 7 illustrates chronological changes of the output request of the motor 1 (corresponding to an accelerator opening of the vehicle 200), the motor speed, the frictional heat quantity, the calorific value of the coil, and the opening of the flow regulating valve 20 of the motor 1. As illustrated in Fig. 7, from time 11, the output request of the vehicle 200 increases, and, for example, the vehicle 200 accelerates from 0 km/h (stopped state) to 40 km/h. Then, at time t2 after time 11, the output request becomes constant, and the vehicle 200 travels at a steady speed. In this case, while the motor speed is below the threshold N1 (between time t1 and time t4 described later), the control device 50 calculates the transient frictional heat quantity due to boundary lubrication at the slide bearings 14 based on the motor speed, and controls the opening of the flow regulating valve 20 based on the calculated frictional heat quantity and the calorific value of the coil.

Next, at time t3 after time t2, the output request of the vehicle 200 increases again, and, for example, the vehicle 200 accelerates from 40 km/h to 100 km/h. Then, at time t5 after time t3, the output request becomes constant and the vehicle 200 travels at a steady speed. In this case, at time t4 immediately after time t3, since the motor speed exceeds the threshold N1, the control device 50 calculates the cumulative frictional heat quantity due to fluid lubrication at the slide bearings 14 based on, instead of the motor speed, the sliding surface temperature detected by the third temperature sensor 25, and controls the opening of the flow regulating valve 20 based on the calculated frictional heat quantity and the calorific value of the coil. While the motor speed is the threshold N1 or above (at and after time t4), the control device 50 controls the opening of the flow regulating valve 20 by using the frictional heat quantity calculated in this manner based on the sliding surface temperature.

### [Operation and Effects]

Next, operation and effects of the refrigerant circulation system 100 according to this embodiment will be explained.

In this embodiment, the refrigerant circulation system 100 which circulates the refrigerant containing CO₂ includes the compressor 3, the motor 1, the motor speed sensor 26, and the control device 50. The compressor 3 compresses the refrigerant. The motor 1 has the rotor 11, the stator 12, the rotation shaft 13 coupled to the rotor 11, and the slide bearings 14 supporting the rotation shaft 13 and which are lubricated by the refrigerant compressed by the compressor 3. The motor 1 is configured so that the refrigerant passing through inside the motor 1 expands after flowing out of the slide bearings 14 and is used to cool the stator 12. The motor speed sensor 26 detects the motor speed. The control device 50 controls at least the motor 1. The motor 1 also has the flow regulating valve 20 which adjusts the flow rate of the refrigerant, and the control device 50 controls the flow regulating valve 20 of the motor 1 to adjust the refrigerant flow rate according to the motor speed detected by the motor speed sensor 26.

According to this embodiment, in the refrigerant circulation system 100 which lubricates the slide bearings 14 of the motor 1 with the refrigerant, the transient frictional heat due to boundary lubrication at the slide bearings 14 can be grasped based on the motor speed. Therefore, according to this embodiment, the flow regulating valve 20 of the motor 1 can be accurately controlled, taking into consideration the frictional heat due to boundary lubrication at the slide bearings 14. Specifically, when the frictional heat is high, the refrigerant flow rate can be increased by the flow regulating valve 20, and as a result, wearing or seizing of the slide bearings 14 due to the frictional heat can be prevented.

Additionally, according to this embodiment, the control device 50 controls the flow regulating valve 20 to increase the refrigerant flow rate as the motor speed decreases. Thus, wearing or seizing of the slide bearings 14 due to the frictional heat can be prevented.

Furthermore, according to this embodiment, the control device 50 controls the flow regulating valve 20 based on the motor speed only when the motor speed is below the given threshold N1. Thus, within the low-speed section where the transient frictional heat is generated due to boundary lubrication, the flow regulating valve 20 can be controlled while accurately grasping the frictional heat based on the motor speed.

Further, according to this embodiment, the control device 50 calculates the frictional heat quantity generated by the slide bearings 14 according to the motor speed, and the calorific value of the coil of the stator 12 to be cooled, calculates the required refrigeration capacity for the refrigerant circulation system 100 to achieve based on the frictional heat quantity and the calorific value of the coil, and controls the flow regulating valve 20 based on the required refrigeration capacity. Thus, the required refrigeration capacity of the entire refrigerant circulation system 100 is set by taking into consideration the frictional heat quantity caused at the slide bearings 14, ensuring adequate cooling of the motor 1 (stator 12) by the refrigerant.

Moreover, according to this embodiment, the refrigerant circulation system 100 further includes the first pressure sensor 21 which detects the pressure of the refrigerant after being compressed by the compressor 3, and the first temperature sensor 22 which detects the temperature of the refrigerant before being supplied to the slide bearings 14 of the motor 1. The control device 50 calculates the target expansion pressure after the refrigerant expands based on the required refrigeration capacity, the pressure detected by the first pressure sensor 21, and the temperature detected by the first temperature sensor 22. The control device 50 further determines the target flow rate of the refrigerant for the flow regulating valve 20 to achieve the target expansion pressure, and controls the flow regulating valve 20 so that the target flow rate of refrigerant flows therethrough. Thus, the target expansion pressure is accurately calculated based on the required refrigeration capacity, and the flow regulating valve 20 is controlled based on the target flow rate according to the target expansion pressure, achieving the required refrigeration capacity accurately.

### [Modifications]

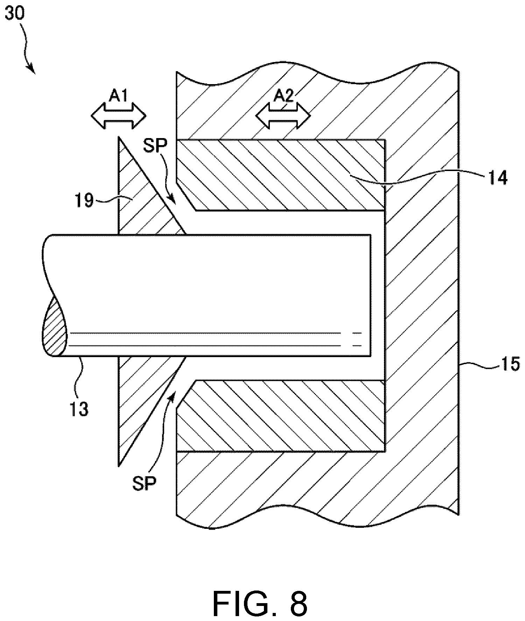

In the above embodiment, the flow regulating valve 20 provided in the refrigerant supply passage 16 is illustrated as an example of the "flow rate adjustment mechanism" which adjusts the refrigerant flow rate of the motor 1. However, the flow rate adjustment mechanism is not limited to the flow regulating valve 20. Referring to Fig. 8, a modification of the flow rate adjustment mechanism will be explained. Fig. 8 is an enlarged cross-sectional view illustrating the slide bearings 14 and the guide parts 19 in the motor 1. As illustrated in Fig. 8, a flow rate adjustment mechanism 30 according to this modification adjusts the refrigerant flow rate by moving the guide parts 19 in the axial direction (arrow A1) or by moving the slide bearing 14 in the axial direction (arrow A2), so that the size of a gap SP from which the refrigerant flows out is changed. The gap is located between the guide part 19 and the end part of the slide bearing 14 on the side of the guide part 19. The flow rate adjustment mechanism 30 moves the guide parts 19 or the slide bearings 14 in the axial direction using various known actuators (not illustrated).

Furthermore, although in the above embodiment the sliding surface temperature of the slide bearings 14 is detected by the third temperature sensor 25, in another modification, the sliding surface temperature may be estimated. For example, the frictional heat generated at the sliding surfaces may be sequentially calculated based on, for example, the motor speed, and the sliding surface temperature may be estimated from the frictional heat.

It should be understood that the embodiments herein are illustrative and not restrictive, since the scope of the invention is defined by the appended claims rather than by the description preceding them, and all changes that fall within metes and bounds of the claims, or equivalence of such metes and bounds thereof, are therefore intended to be embraced by the claims.

### DESCRIPTION OF REFERENCE CHARACTERS

- 1: Motor
- 3: Compressor
- 5: Heat Exchanger
- 11: Rotor
- 12: Stator
- 13: Rotation Shaft
- 14: Slide Bearing
- 16: Refrigerant Supply Passage
- 19: Guide Part
- 20: Flow Regulating Valve
- 30: Flow Rate Adjustment Mechanism
- 50: Control Device
- 100: Refrigerant Circulation System
- 200: Vehicle

## Claims

1. A refrigerant circulation system (100) configured to circulate refrigerant containing CO₂ therethrough, comprising:
a compressor (3) configured to compress the refrigerant;
a motor (1) including:
a rotor (11);
a stator (12);
a rotation shaft (13) coupled to the rotor (11); and
slide bearings (14) supporting the rotation shaft (13), the slide bearings (14) being lubricated using the refrigerant compressed by the compressor (3), the motor (1) being configured so that the refrigerant passing through the motor (1) expands after flowing out of the slide bearings (14), and is used for cooling one of the rotor (11) and the stator (12);
a motor speed sensor (26) configured to detect a rotational speed of the motor (1); and
a control device (50) configured to control at least the motor (1),
wherein the motor (1) further includes a flow rate adjustment mechanism (30) configured to adjust a flow rate of the refrigerant, and
wherein the control device (50) is configured to control the flow rate adjustment mechanism (30) to adjust the flow rate of the refrigerant according to the rotational speed detected by the motor speed sensor (26).

2. The refrigerant circulation system (100) of claim 1, wherein the control device (50) controls the flow rate adjustment mechanism (30) to increase the flow rate of the refrigerant as the rotational speed decreases.

3. The refrigerant circulation system (100) of claim 1 or 2, wherein the control device (50) controls the flow rate adjustment mechanism (30) based on the rotational speed in a first speed range (R1) and in particular only when the rotational speed is below a given threshold (N1).

4. The refrigerant circulation system (100) of any one of the preceding claims, comprising:
a third temperature sensor (25) which detects a sliding surface temperature of the slide bearings (14),
wherein the control device (50) is configured to control the flow rate adjustment mechanism (30) to adjust the flow rate of the refrigerant according to a temperature measured by the third temperature sensor (25).

5. The refrigerant circulation system (100) of claim 4, wherein the control device (50) controls the flow rate adjustment mechanism (30) based on the temperature measured by the third temperature sensor (25) in a third speed range (R3) and in particular only when the rotational speed is above a given threshold (N1).

6. The refrigerant circulation system (100) of any one of the preceding claims,
wherein the control device (50) calculates:
a frictional heat quantity generated by the slide bearings (14) according to the rotational speed and/or a sliding surface temperature of the slide bearings (14),
a calorific value of a coil of the rotor (11) and/or the stator (12) to be cooled, and
a required refrigeration capacity to be achieved by the refrigerant circulation system (100) based on the frictional heat quantity and the calorific value of the coil, and
wherein the control device (50) controls the flow rate adjustment mechanism (30) based on the required refrigeration capacity.

7. The refrigerant circulation system (100) of claim 6, wherein the control device (50) determines the calorific value of the coil based on a current supplied to the coil and/or a control signal supplied to the motor 1.

8. The refrigerant circulation system (100) of any one of the preceding claims, further comprising:
at least one pressure sensor (21, 23) configured to detect a pressure of the refrigerant in the refrigerant circulation system (100) and/or at least one temperature sensor (22, 24) configured to detect a temperature of the refrigerant in the refrigerant circulation system (100),
wherein the control device (50) controls the flow rate adjustment mechanism (30) in dependence on a pressure measured by the at least one pressure sensor (21, 23) and/or a temperature measured by the at least one temperature sensor (22, 24).

9. The refrigerant circulation system (100) of any one of the preceding claims, further comprising:
a pressure sensor (21, 23) configured to detect a pressure of the refrigerant after being compressed by the compressor (3); and
a temperature sensor (22, 24, 25) configured to detect a temperature of the refrigerant before the refrigerant is supplied to the slide bearings (14),
wherein the control device (50) calculates a target expansion pressure after the refrigerant expands based on a required refrigeration capacity, the pressure detected by the pressure sensor (21, 23), and the temperature detected by the temperature sensor (22, 24, 25),
wherein the control device (50) determines a target flow rate of the refrigerant by the flow rate adjustment mechanism (30) for achieving the target expansion pressure, and
wherein the control device (50) controls the flow rate adjustment mechanism (30) so that the refrigerant flows at the target flow rate.

10. The refrigerant circulation system (100) of any one of the preceding claims,
wherein the motor (1) further includes guide parts (19) configured to direct the refrigerant immediately after flowing out of the slide bearings (14) toward the coil applied to one of the rotor (11) and the stator (12) to be cooled.

11. The refrigerant circulation system (100) of claim 10,
wherein the flow rate adjustment mechanism (30) is configured to adjust the flow rate of the refrigerant by moving one of the guide parts (19) and the slide bearings (14) in an axial direction of the motor (1) so that a size of a gap (SP) from which the refrigerant flows out is changed, the gap (SP) being located between the guide part (19) and an end part of the slide bearing (14) on a guide part (19) side.

12. The refrigerant circulation system (100) of any one of the preceding claims, wherein the flow rate adjustment mechanism (30) comprises a flow regulating valve (20) arranged in a refrigerant supply passage (16).

13. A vehicle comprising the refrigerant circulation system (100) of any one of the preceding claims.

14. The vehicle of claim 13, wherein the motor is configured for driving the vehicle.

15. The vehicle of claim 13 or 14, wherein the vehicle is an electric vehicle driven by the motor.
